# FASCICULE DE BREVET EUROPEEN

(11) **EP 4 359 611 B1**
(45) Date de publication et mention de la délivrance du brevet: **26.11.2025**
(21) Numéro de dépôt: 22734009.8
(22) Date de dépôt: 23.06.2022
(51) Int. Cl.: E02D 5/38, E02D 5/66, E02D 5/68, E02D 5/18, E02D 5/20

(54) **COFFRAGE PERDU POUR MURETTE DE GUIDES POUR LA CONSTRUCTION D'UNE PAROI DE PIEUX**
VERLORENE SCHALUNG FÜR LEITWÄNDE FÜR DEN BAU EINER PFAHLWAND
LOST FORMWORK FOR GUIDE WALLS FOR THE CONSTRUCTION OF A PILE WALL

(30) Priorité: 23.06.2021 FR 2106699
(43) Date de publication de la demande: 01.05.2024
(73) Titulaire: ADB System, 95300 Pontoise (FR)
(72) Inventeur: HEMET, Adrien, 95300 Pontoise (FR)
(74) Mandataire: Oak & Fox
(86) Numéro de dépôt international: PCT/EP2022/067220
(87) Numéro de publication internationale: WO 2022/268976

(56) Documents cités:
- EP-B1- 0 748 905
- CN-U- 210 507 411
- CN-U- 211 446 886
- DE-A1- 102004 040 191
- DE-A1- 4 402 429
- DE-C2- 4 308 499

## Description

### Domaine de l'invention

Le domaine de l'invention se rapporte à celui des dispositifs pour positionner et guider des tarières ou des forets industriels dans le sol pour positionner et stabiliser des parois de pieux.

### État de la technique

Actuellement, dans les grands ouvrages réalisés dans le BTP (bâtiment), une solution utilisée consiste à former des structures de soutènement formées de pieux. Ces structures permettent de soutenir les terres. Les pieux d'une telle structure de soutènement sont positionnés dans le sol et sont maintenus par des butons une fois excavation des terres faite de manière à former des lignes de soutien d'une zone à bâtir. Le pieu est un élément de construction qui peut être choisi en béton, en acier ou en bois ou encore dans un assemblage mixte. Ces pieux sont généralement utilisés lorsque le terrain ne peut pas supporter en surface les contraintes dues à la masse de l'ouvrage.

La structure obtenue est une paroi de pieux formée par des alignements de pieux verticaux. Généralement, les pieux d'une paroi sont alternés selon deux types : des pieux primaires par exemple en béton maigre et des pieux secondaires par exemple en béton armé. Les pieux secondaires sont agencés de sorte à recouper les pieux primaires afin d'assurer une continuité latérale de matière.

Un problème connu d'un mauvais positionnement d'un pieu est que cela engendre une perte de temps importante sur un chantier et des manœuvres de réajustements très complexes à mettre en œuvre. Une conséquence peut être une réorganisation complète du planning de chantier. Afin de résoudre les problèmes liés aux erreurs de positionnement, il est connu de concevoir des murettes de guides en béton dans lequel un coffrage perdu à base de polystyrène a permis de concevoir des ouvertures destinées à recevoir des pieux.

Toutefois, cette solution impose le retrait du polystyrène qui n'est pas un matériau écologique. Son retrait est complexe à mettre en œuvre une fois le béton coulé autour de sa géométrie. Par ailleurs, il persiste des éléments de polystyrène parasites même en procédant à un retrait.

Un autre problème est que les pieux doivent être alternés dans une paroi de pieux sécants entre des pieux forts dits secondaires, par exemple en béton armé, et des pieux maigres dits primaires, de sorte que les pieux maigres sont mordus par des pieux adjacents forts. Or, lorsque les structures en polystyrène sont retirées, des erreurs sont faites sur la nature du pieu à positionner en alternance, car aucune indication fiable n'est présente. Il arrive par exemple que deux pieux forts soient agencés de manière adjacente par erreur causant une désorganisation du chantier et des dommages sur la structure.

Il existe un besoin de trouver une solution qui permet de guider les pieux sécants de manière précise, tout en sécurisant leur alternance. Enfin, il existe un besoin de trouver une solution non polluante qui minimise les opérations humaines notamment de traitement des déchets résultants de la réalisation de tels ouvrages.

L'invention permet de pallier ces inconvénients. Le document CN210507411U divulgue un coffrage pour parois de guidage de pieux occlus et des structures de support pour parois de guidage de pieux occlus.

### Résumé de l'invention

Selon un premier aspect, l'invention concerne un procédé de fabrication d'un élément monobloc définissant un coffrage perdu destiné à former une cible et/ou un guide de forage caractérisé en ce qu'il comporte :
▪ Mélange d'un volume de liant hydraulique comportant un premier volume d'eau et un second volume d'un élément de liaison avec un volume d'une base organique ;
▪ Moulage pour obtenir un élément monobloc comportant au moins une portion cylindrique d'un rayon d'au moins 40cm,
▪ Séchage dudit mélange moulé formant un élément monobloc.

Un avantage de l'invention est de réaliser un coffrage perdu qui sera détruit lors de l'opération de forage. Un intérêt est d'éviter une opération de retraitement de l'élément formant le coffrage perdu. L'invention permet un gain de temps dans l'opération de forage.

Selon un mode de réalisation, l'invention concerne un procédé de fabrication d'un élément monobloc définissant un coffrage perdu destiné à former une cible et/ou un guide de forage caractérisé en ce qu'il comporte :
▪ Mélange d'un volume de liant hydraulique comportant un premier volume d'eau et un second volume d'un élément de liaison avec un volume d'une base organique ;
▪ Moulage pour obtenir un élément monobloc comportant au moins une portion cylindrique,
▪ Séchage dudit mélange moulé formant un élément monobloc.

Selon un mode de réalisation, le procédé comprend une étape d'évidement de matière d'une portion centrale de l'élément monobloc dans une zone centrale de la portion de cylindre pour former un guide. Un avantage est de définir une prise pour le transport des éléments monoblocs. Un autre avantage est d'insérer une fiche permettant de stabiliser l'élément monobloc lors de l'opération de coulage du béton pour réaliser la structure d'accueil.

Selon un mode de réalisation, le procédé comprend une étape de découpage de l'élément monobloc, ledit découpage permettant d'obtenir une forme prédéterminée. Un avantage est de standardiser la taille du moule ou du moins de réduire le nombre de moules et d'adapter dans un second la taille de l'élément monobloc au cas d'espèce.

Selon un mode de réalisation, le procédé comprend une étape d'assemblage d'une pluralité d'éléments monoblocs entre eux afin de réaliser une murette de guides, lesdits éléments monoblocs comportant des éléments de liaison afin de solidariser deux extrémités de deux éléments monoblocs entre eux. Un avantage est de réaliser des éléments monoblocs modulaires permettant d'être assemblés selon différentes configurations. Selon un mode de réalisation, les profilés cylindriques extrémaux de l'élément monobloc comportent plusieurs éléments de liaison à leur circonférence de sorte à permettre de réaliser différents assemblages d'éléments monoblocs. Un autre avantage est de réaliser des éléments monoblocs plus facilement transportables et maniables.

Selon un mode de réalisation, le moulage de l'élément monobloc est réalisé au moyen d'un moule permettant de former au moins un guide dont les centres des portions cylindriques considérés ensemble forment une géométrique caractéristique, telles qu'une ligne, une courbe, une forme en « T » ou une forme en « L ».

Selon un mode de réalisation, les portions cylindriques adjacentes d'un élément monobloc sont distantes d'une distance prédéfinie, tangents entre eux ou intersectés sur une portion de leur rayon.

Selon un mode de réalisation, le mélange comprend :
▪ d'un volume d'eau dans une proportion en volume du mélange comprise entre 15 et 27% ;
▪ d'un volume de chaux et/ou de plâtre et/ou de ciment et/ou de laitier de haut fourneau formant un élément de liaison dans une proportion en volume du mélange comprise entre 20% et 40% ;
▪ d'un volume de paille formant une base organique dans une proportion en volume du mélange comprise entre 45% et 55%.

Avantageusement, au terme de l'opération de mélange, le volume d'eau a été en partie consommé dans la réaction de prise et une autre partie s'est évaporée lors d'une opération de séchage.

Selon une gamme un peu plus large, le volume de paille formant une base organique peut être sélectionné dans une proportion en volume du mélange comprise entre 33% et 65%.

Selon un exemple, de réalisation, on réalisera un mélange offrant le maximum de compacité avec un volume de paille supérieur à 65% du volume total, par exemple avec 75% du volume total, 85% du volume total, voire 95% du volume total. Dans ces derniers cas, le volume de liant hydraulique complète le volume choisi de paille, c'est-à-dire respectivement 25%, 15%, 5%.

L'ensemble des dosages peut être reporté en poids, par exemple en kilogramme, en considérant la masse volumique de chacun des éléments ajoutés dans le mélange.

Selon un mode de réalisation, le procédé comporte une étape de colorisation de chaque profilé cylindrique d'un mélange pour former un élément monobloc ayant une coloration alternée entre deux profilés cylindriques adjacents. Un avantage est de permettre de réduire les erreurs des types de pieux qui sont insérés dans les cavités forées.

Selon un second aspect, l'invention concerne une utilisation d'un ou plusieurs éléments monoblocs pour définir un coffrage perdu, ledit au moins un élément monobloc étant formé par un mélange d'un volume de liant hydraulique comportant un premier volume d'eau et un second volume d'un élément de liaison et d'un volume d'une base organique, ledit au moins un élément monobloc formant au moins une portion cylindrique, ledit coffrage perdu étant utilisé pour former une structure d'accueil en béton pour l'accueil d'une paroi de pieux.

Selon un troisième aspect, l'invention concerne une utilisation d'un ou plusieurs élément(s) monobloc(s) pour définir une cible et un guide de forage, ledit au moins un élément monobloc étant formé par un mélange d'un volume de liant hydraulique comportant un premier volume d'eau et un second volume d'un élément de liaison et d'un volume d'une base organique, ledit au moins un élément monobloc formant au moins une portion cylindrique, le au moins un élément monobloc étant agencé(s) dans une structure d'accueil en béton destiné à recevoir des pieux, ledit forage étant réalisé au moyen d'une tarière dont la tête est appliquée sur une surface du au moins un élément monobloc.

L'utilisation de l'invention peut également être décrite comme un procédé pour concevoir un coffrage perdu d'une structure d'accueil de guides, ledit coffrage perdu définissant une cible de guidage pour le forage. En outre, le coffrage perdu a permis de réaliser la structure d'accueil.

Selon un mode de réalisation, l'utilisation le mélange du au moins un élément monobloc utilisé comprend :
▪ d'un volume d'eau dans une proportion en volume du mélange comprise entre 15 et 27% ;
▪ d'un volume de chaux et/ou de plâtre et/ou de ciment et/ou de laitier de haut fourneau formant un élément de liaison dans une proportion en volume du mélange comprise entre 20% et 40% ;
▪ d'un volume de paille formant une base organique dans une proportion en volume du mélange comprise entre 45% et 55%.

Selon un quatrième aspect, l'invention concerne une structure d'accueil formant une murette de guides pour la réalisation d'une paroi de pieux, ladite structure d'accueil comportant une base de béton et des cavités, lesdites cavités étant occupées par au moins un élément monobloc formé par un mélange d'un volume de liant hydraulique comportant un premier volume d'eau et un second volume d'un élément de liaison et d'un volume d'une base organique.

Selon un mode de réalisation, le mélange du au moins un élément monobloc de la structure d'accueil comprend :
▪ d'un volume d'eau dans une proportion en volume du mélange comprise entre 15 et 27% ;
▪ d'un volume de chaux et/ou de plâtre et/ou de ciment et/ou de laitier de haut fourneau formant un élément de liaison dans une proportion en volume du mélange comprise entre 20% et 40% ;
▪ d'un volume de paille formant une base organique dans une proportion en volume du mélange comprise entre 45% et 55%.

L'invention concerne également une utilisation d'un élément monobloc pour définir un coffrage perdu, ledit élément monobloc étant formé par un mélange d'un volume de liant hydraulique comportant un premier volume d'eau et un second volume d'un élément de liaison et d'un volume d'une base organique, ledit élément monobloc formant au moins une portion cylindrique, ladite utilisation comportant la formation d' une structure d'accueil en béton pour l'accueil d'une paroi de pieux.

L'invention concerne également une utilisation d'un ou plusieurs élément(s) monobloc(s) pour définir une cible et un guide de forage, ledit au moins un élément monobloc étant formé par un mélange d'un volume de liant hydraulique comportant un premier volume d'eau et un second volume d'un élément de liaison et d'un volume d'une base organique, ledit au moins un élément monobloc formant au moins une portion cylindrique, ladite utilisation comportant l'agencement dudit au moins un élément monobloc dans une structure d'accueil en béton destiné à recevoir des pieux, ledit forage étant réalisé au moyen d'une tarière dont la tête est appliquée sur une surface de ledit au moins un élément monobloc.

### Brève description des figures

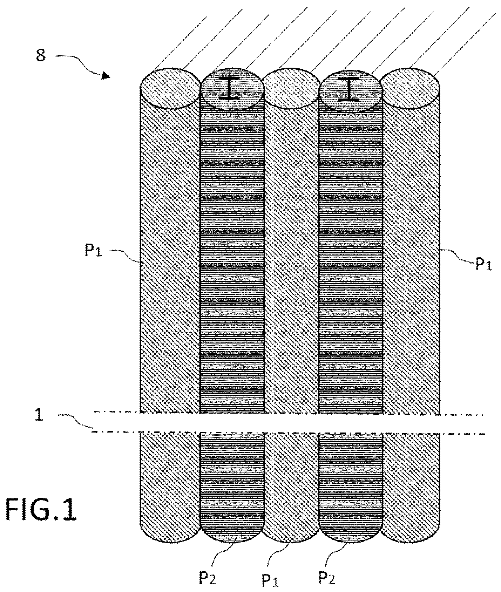

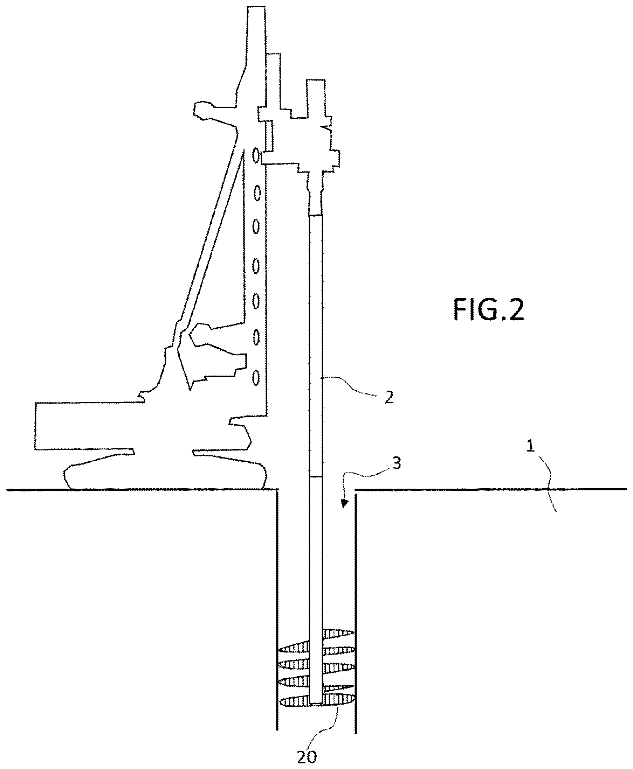

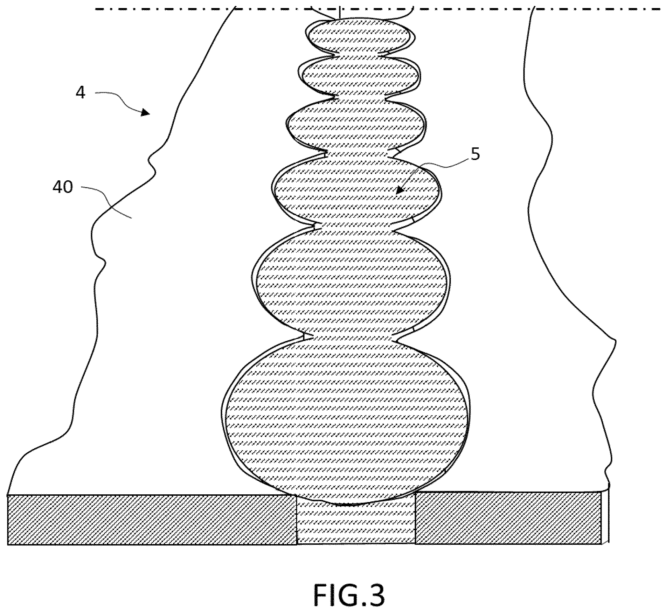

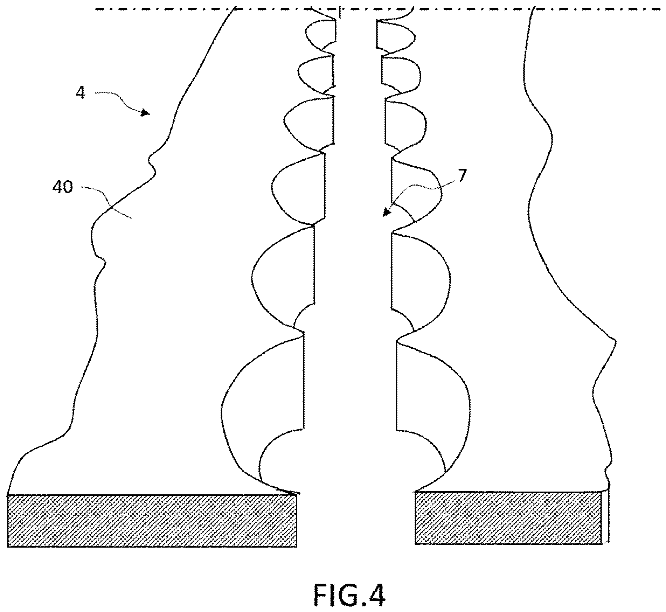

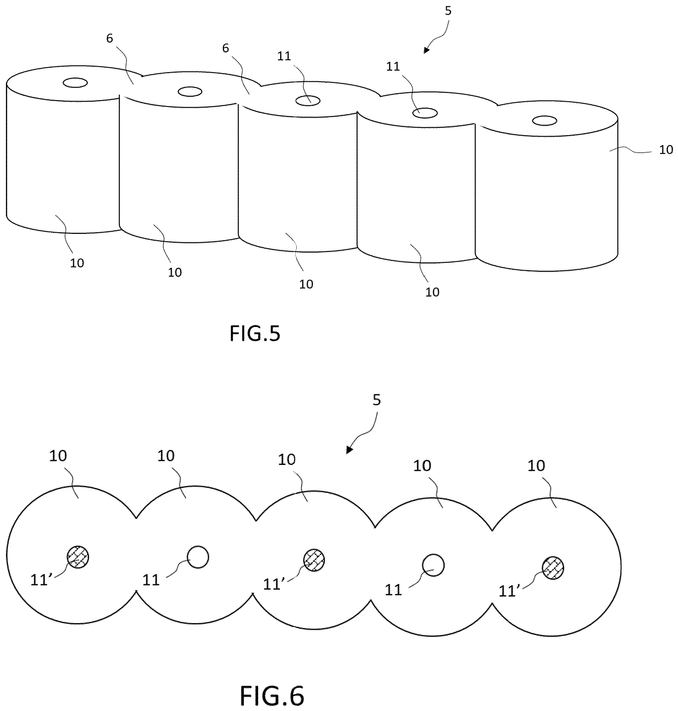

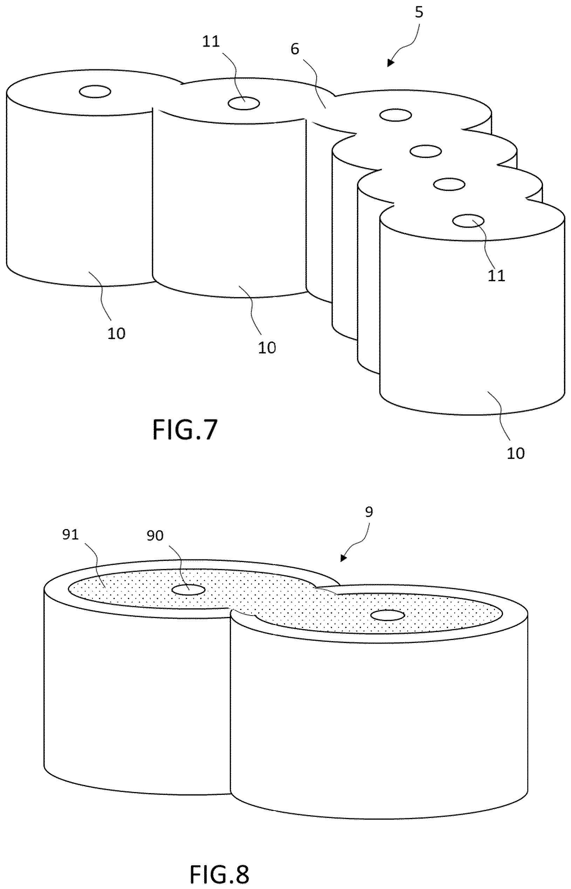

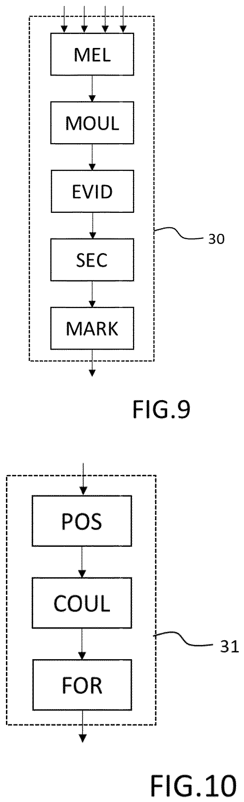

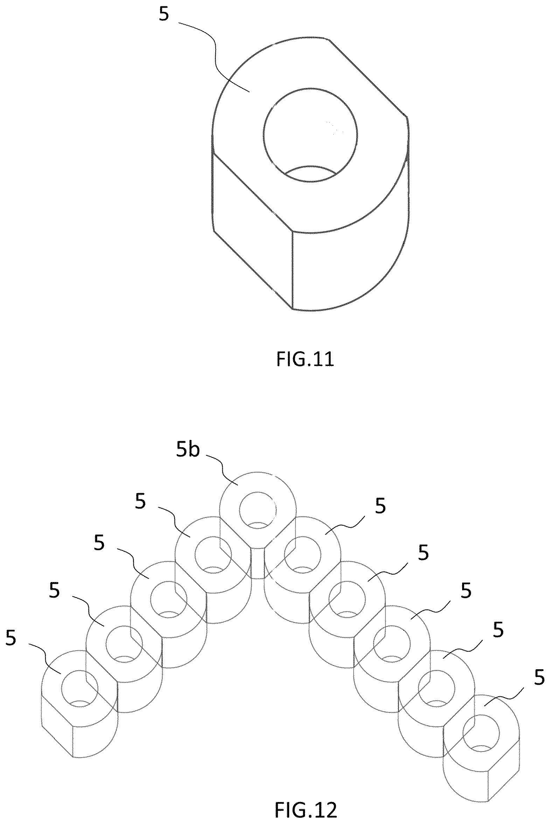

D'autres caractéristiques et avantages de l'invention ressortiront à la lecture de la description détaillée qui suit, en référence aux figures annexées, qui illustrent :
▪ Figure 1 : un exemple de paroi de pieux sécants fixés dans des ouvertures du sol au moyen d'une structure d'accueil de l'invention ;
▪ Figure 2 : un exemple de forage au sein d'une ouverture dans le sol dont le guidage a été permis grâce d'une structure d'accueil de l'invention ;
▪ Figure 3 : un exemple d'une structure d'accueil de l'invention comportant un élément monobloc ;
▪ Figure 4 : un exemple d'une structure d'accueil de l'invention sans élément monobloc ;
▪ Figure 5 : un premier exemple d'élément monobloc représenté en perspective de l'invention comportant une pluralité de profilés cylindriques formant un coffrage perdu pour former une structure d'accueil de l'invention ;
▪ Figure 6 : un exemple d'élément monobloc selon la figure 4 en vue de dessus de l'invention formant un coffrage perdu pour former une structure d'accueil de l'invention ;
▪ Figure 7 : un second exemple d'élément monobloc représenté en perspective de l'invention comportant une pluralité de profilés cylindriques formant un coude formant pour former une structure d'accueil de l'invention ;
▪ Figure 8 : un exemple de moule pour réaliser une structure monobloc de l'invention ;
▪ Figure 9 : un exemple d'étapes du procédé de fabrication d'un élément monobloc de l'invention ;
▪ Figure 10 : un exemple d'étapes du procédé de forage guidé à partir d'une structure d'accueil de l'invention ;
▪ Figure 11 : un exemple d'un élément monobloc adapté pour guider le forage d'un seul pieu ;
▪ Figure 12 : un exemple de lignes d'éléments monoblocs formant un angle entre elles autour d'un élément monobloc d'angle.

La figure 1 représente un exemple d'une partie d'un mur de soutènement 8 définissant une paroi de pieux de sécants P₁, P₂. Les pieux secondaires P₂, dits forts, sont alternés avec des pieux primaires P₁, dits maigres. Les pieux sont insérés dans des cavités définissant des ouvertures cylindriques réalisées dans le sol pour maintenir ces dernières. Les pieux peuvent avoir des diamètres de 30cm à 1,5m et selon certains cas peuvent aller en deçà ou au-delà de cette gamme. La figure 1 représente une partie des pieux immergés maintenus sous le sol 1 et une autre partie émergée permettant de définir un mur saillant permettant de bâtir un ouvrage sur des fondations rendues stables.

Une telle structure de soutènement est obtenue grâce au forage de trous 3 dans le sol 1 afin de positionner les pieux P₁, P₂.

La figure 2 représente un exemple de forage 3 réalisée grâce à une tarière 2, 3 comportant un manche 2 et une tête 20. Généralement, les trous sont réalisés entre quelques dizaines de centimètres et quelques mètres selon les sols et l'ouvrage à réaliser qui sera soutenu par notamment par la structure de soutènement.

Les trous sont réalisés de manière définir le tracé d'une paroi de pieux sécants. Le tracé peut définir une ligne au sol ou une alternance de segments formant des angles entre eux. Typiquement, un mur de pieux sécants peut définir un angle droit.

La figure 3 représente un exemple de réalisation d'une murette de guides 4, également appelé structure d'accueil comportant un élément monobloc 5 comportant 6 profilés cylindriques. Selon un autre cas, la structure d'accueil 4 peut comprendre deux éléments monoblocs 5 chainés et liés par un élément de liaison. L'élément de liaison peut être agencé le long d'un bord d'une extrémité d'un élément monobloc et peut s'étendre sur sa hauteur ou une partie de sa hauteur. Selon un exemple l'élément de liaison peut être assuré par une liaison glissière, par exemple au moyen rail ou un guide linéaire, une rainure, une queue d'aronde. La liaison peut être assurée par un glissement par translation entre deux profilés extrémaux dans chacune des structures monoblocs.

La structure d'accueil 4 est représentée sans élément monobloc 5 formant le coffrage perdu à la figure 4. Les figures 5, 6 et 7 représentent des exemples d'éléments monoblocs.

L'invention concerne une structure de guides 4 comportant un élément monobloc 5 de l'invention définissant un coffrage perdu. La structure d'accueil 4 est obtenue par une opération de coulage de béton dans une cavité réalisée dans le sol 1 dans laquelle est positionné au moins un élément monobloc 5. L'élément monobloc 5 impose la géométrie de la structure d'accueil 4 par moulage. L'opération peut également être considérée comme un contre-moulage du fait que l'élément monobloc 5 est conçu pour définir des ouvertures au sein de la structure d'accueil 4 en formant un coffrage perdu. Le contre-moulage est entendu comme un moulage permettant une réservation d'espace dédiée aux guides au sein de la structurée coulée en béton.

La figure 5 représente un élément monobloc 5 de l'invention comportant une pluralité de guides 10 sensiblement cylindriques. Les guides sont solidarisés entre eux grâce à une opération de moulage dans une géométrie dans laquelle les cylindres définissant les guides sont intersectés.

Dans sa forme la plus simple, l'élément monobloc 5 comporte qu'un seul profilé cylindrique ou sensiblement cylindrique. Selon différents modes de réalisation, la structure d'accueil 4 peut comprendre une pluralité de profilés cylindriques intersectés, tels que 3, 4, 5 profilés adjacents deux à deux, voire 10 profilés intersectés et dans certains cas plus de 15 ou 20 profilés. Selon un mode de réalisation, les profilés sont intersectés selon des segments linéaires liés entre eux par des profilés définissant des intersections de deux segments. Différentes formes peuvent être obtenues tels que des formes en « L », en « U », en « T » ou toute autre forme. La figure 7 représente un exemple de réalisation dans lequel l'élément monobloc 5 forme deux segments liés définissant un angle entre eux.

Une structure d'accueil 4 permet de garder une implantation intacte malgré de fortes coactivités, de garder le contrôle sur l'altimétrie d'une plateforme. Une telle structure d'accueil permet de réduire l'incertitude liée à une évaluation humaine telle que celle d'un opérateur contrôlant la juste position de l'outil pendant le forage. Une telle structure d'accueil permet d'augmenter considérablement la précision du forage, tout en gagnant du temps.

La figure 6 représente une vue de dessus de la structure d'accueil 5 de la figure 5. Dans les exemples des figures 5 et 6 sont représentées des portions centrales 11 évidées permettant de ménager une réservation de matière. La réservation réalisée permet avantageusement de transporter l'élément monobloc 5 ou de cibler le foret au centre du profilé cylindrique. Les notations 11, 11' représentent dans cet exemple deux marquages de couleurs différentes pour faciliter l'association d'un pieu fort ou maigre avec le marquage du guide 10. Toutefois, le marquage est préférentiellement réalisé par l'ajout d'un colorant lors de la fabrication de l'élément monobloc 5.

La réservation de matière permet, en outre, au géomètre d'avoir un repère central du coffrage, de connecter un accessoire de levage en son point de gravité, d'être fixé par une fiche métallique ou encore de définir une aide visuelle lors du positionnement de la machine de forage.

La figure 8 représente un moule 9 d'un élément monobloc 5. Dans le cas d'exemple de la figure 8, le moule comporte deux cavités pour réaliser un élément monobloc comportant deux profilés cylindriques intersectés.

La figure 9 représente un exemple du procédé de l'invention 30 pour réaliser un élément monobloc 5.

Le procédé 30 vise à réaliser un élément monobloc comportant une base organique telle que de la paille. Dans la présente invention, une base organique définit un élément végétal ou animal formant sensiblement une tige. Plus particulièrement, on appellera une base organique la partie de la tige de certaines graminées, ou plus généralement une paille végétale. Selon un mode de réalisation la base organique est une base d'origine végétale.

Selon un exemple, l'élément monobloc est fait en terre-paille. La base organique peut être de la paille, telle que de la paille de chanvre, appelée chènevotte, du foin, du crin de chevaux ou tout autre élément permettant de définir une base organique au mélange à réaliser. Selon un mode de réalisation, la base organique comporte des fibres végétales. Selon un mode de réalisation, les fibres végétales sont des fibres de chanvre et/ou des fibres de lin. Selon un mode de réalisation, la paille est une paille de lin, paille ayant des propriétés mécaniques augmentant la solidité de l'élément monobloc moulé. Selon un mode de réalisation, le lin est sous forme d'anas de lin. Les anas sont des fragments de paille récupérés lors du teillage. Ils représentent environ 50% de l'ensemble de la plante. Cette disposition est particulièrement avantageuse car elle permet de bénéficier des propriétés du lin tout en utilisant des anas, qui sont des sous-produits de l'industrie du lin et sont donc peu onéreux.

Le mélange comporte également un liant hydraulique formé par un volume d'eau et un volume d'un élément de liaison, appelée également base de terre. Différentes matières peuvent être utilisées pour former l'élément de liaison du mélange. À titre d'exemple, une terre crue, par exemple argileuse, peut être utilisée. Lorsque la terre ne contient pas d'argile, un volume d'argile peut par exemple être ajouté.

Lorsqu'une terre crue est utilisée, une première étape vise à récupérer un premier volume de terre préférentiellement tamisé avec une granulométrie suffisamment fine pour réaliser un mélange homogène.

Toutefois, d'autres éléments de liaison peuvent être utilisés pour servir de liant dans le mélange. On peut par exemple utiliser des liants minéraux. Ces éléments sont, par exemple, du ciment, du plâtre, de la chaux ou un mélange de ces derniers matériaux. Ce liant peut être mélangé à un volume de terre crue ou utilisé seul. Selon un exemple de réalisation, l'argile est utilisée seule avec de l'eau. Selon les modes de réalisation de l'invention, on préfèrera un liant ne réalisant pas une résistance mécanique trop importante de l'élément monobloc 5. En l'occurrence, la chaux permet de réaliser un élément monobloc 5 plus aéré et plus friable lors de l'opération de forage. Selon un mode de réalisation, le liant utilisé est du laitier de haut-fourneau. Le laitier de haut-fourneau correspond aux scories qui sont formées en cours de fusion ou d'élaboration du métal par voie liquide. Il s'agit d'un mélange composé essentiellement de silicates, d'aluminates et de chaux, avec divers oxydes métalliques, à l'exception des oxydes de fer. Le laitier de haut-fourneau est un liant particulièrement avantageux car il permet d'avoir les propriétés mécaniques de tenue et de prise tout en étant peu onéreux car étant un sous-produit de l'industrie métallurgique. Selon un mode de réalisation, le laitier de haut fourneau est utilisé en combinaison avec un autre liant, tel du ciment, de la chaux ou du plâtre.

Selon un mode de réalisation, un volume de paille et un volume d'eau sont ajoutés petit à petit tout en malaxant le mélange. Une étape de mélange est notée MEL sur la figure 9. Le choix de la paille, son ajout au mélange sont préférentiellement réalisés de sorte à obtenir un mélange aéré et homogène. La paille peut être par exemple arrosée tout en la mélangeant. Une paille de chanvre permet de retenir l'eau et de former une structure compacte.

Selon un exemple, un mélange peut comporter en proportion en volume 22L d'eau, 20L de chaux, 10L de plâtre, 50L de chènevotte.

Selon un mode de réalisation, le mélange comporte un volume de base organique qui est du lin. Le lin comporte des propriétés mécaniques permettant avantageusement d'augmenter la solidité de l'élément monobloc 5 formé. Selon un mode de réalisation, le lin est sous forme de paille de lin.

Selon un exemple, le mélange comporte un volume de 20 litres de ciment ou d'argile, de 20 litres de laitier de haut fourneau, de 50 litres d'eau et de 200 litres de paille de lin ou d'anas de lin.

Selon un exemple de réalisation, un colorant peut être ajouté lors du mélange, le mélange étant ensuite réparti dans des moules donnés ou des parties d'un moule de sorte à obtenir une alternance de profilés cylindriques ayant des couleurs alternés.

Selon un autre exemple de réalisation, le colorant peut être ajouté lors du moulage de sorte que la couleur choisie soit bien associée dans le moule de forme cylindrique de manière alternée avec un autre moule de forme cylindrique lorsque l'élément monobloc comporte plusieurs profilés cylindriques.

Le mélange est alors déversé dans un moule aux dimensions adéquates pour former des guides appropriés pour réaliser les murettes de guides. Une étape MOUL est représentée sur le diagramme de la figure 9. Une géométrie particulièrement intéressante est une succession de profilés cylindriques intersectés dont les centres sont espacés d'une certaine distance prédéfinie comme cela est représenté dans la cavité 91 du moule 9. Le moule 9 définit un profilé cylindrique intersecté avec un autre profilé cylindrique.

Selon un exemple de réalisation, les guides cylindriques définissant le moule sont tangents entre eux deux à deux. Selon un autre exemple, les guides cylindriques définissant le moule sont distants d'une distance prédéfinie, par exemple quelques centimètres, 5cm ou 10cm selon des exemples.

Selon un mode de réalisation, le procédé de l'invention comprend une étape d'évidement EVID permettant de réserver un volume de matière dans l'élément monobloc moulé.

L'évidement peut être réalisé pendant le moulage par l'intégration d'un volume plein, tel que des tiges 90 représentées à la figure 8, dans le moule 9 permettant de réserver un espace dans l'élément monobloc 5 obtenu. De manière avantageuse, l'évidement est réalisé au centre d'une des faces du profilé cylindrique de l'élément monobloc 5. Cet évidement permet de faciliter le retrait de l'élément monobloc de la murette de guides lorsqu'un retrait est pratiqué. Selon un autre exemple, l'évidement permet de transporter facilement l'élément monobloc 5 grâce à l'insertion d'une tige de maintien par exemple manipulé par un appareil de chantier.

Selon un autre exemple, l'évidement permet l'insertion d'une fiche métallique de sorte que la structure d'accueil soit maintenue lors du forage.

Selon un autre exemple, l'évidement permet d'insérer un marquage physique qui peut être également détruit lors du forage.

Le matériau moulé ou coffré à partir d'eau, de terre crue et/ou de ciment et/ou de chaux et/ou de plâtre et d'un volume de base organique telle que de la paille, est ensuite séché. L'opération de séchage peut être réalisée à l'air libre. Une opération de séchage SEC est notée sur la figue 9.

Selon un exemple, une étape de coloration MARK permet de réaliser des éléments monoblocs comprenant une succession de profilés alternés identifiables, c'est-à-dire avec des marquages de différentes couleurs. Le marquage peut être réalisé de différentes manières. Une première manière est d'ajouter un colorant lors de la fabrication de l'élément monobloc 5. Un premier colorant peut être ajouté dans un mélange dans un premier profilé et un second colorant peut être ajouté dans un mélange dans un second profilé adjacent au premier profilé et ainsi de suite un profilé sur deux. Cette méthode à l'avantage de libérer des copeaux, portions, poussières ou des morceaux de la couleur du colorant lors du forage. Ainsi, l'alternance de pieux primaires et secondaires peut être assurée par la reconnaissance visuelle d'une couleur se dégageant lors du forage. Cette solution permet un contrôle simple lors du forage.

Selon une autre manière, le marquage peut être réalisé par un ajout d'une indication sur toute ou partie de la surface supérieure d'un profilé cylindrique par exemple après la réalisation d'un élément monobloc 5. Selon un exemple, il peut s'agit d'une peinture projetée.

La figure 10 représente un exemple du procédé 31 de l'invention pour forer une ouverture dans le sol afin d'insérer un pieu d'un mur de soutènement. Le procédé 31 comprend une première étape de positionnement de l'élément monobloc 5 dans une cavité réalisée au sol. Le positionnement de l'élément monobloc 5 est réalisé de sorte que les centres de chaque profilé cylindrique correspondent aux axes de forage préétablis. L'élément monobloc 5 est alors maintenu en position et une opération de coulage d'un volume de béton est réalisée. Le coulage est réalisé dans la cavité où est inséré l'élément monobloc de sorte que le béton occupe l'espace entre la bordure de la cavité est la paroi de l'élément monobloc 5. Le coulage du béton 40 est réalisé jusqu'à obtenir une hauteur de structure suffisante pour obtenir une structure d'accueil 4 stabilisée et permettant de réaliser un guidage d'une pluralité de forages.

Lorsque l'opération de coulage est réalisée, un séchage du béton est réalisé de manière à finaliser la structure d'accueil 4 définitivement. Un appareil de chantier, tel que celui représenté à la figure 2, est alors positionné à proximité de la structure d'accueil pour porter et guider une tarière 2, 3 à l'aplomb d'un guide 10 de l'élément monobloc 5. Préférentiellement, un positionnement du centre de l'axe de la tarière est aligné avec le marquage d'un guide 10 d'un élément monobloc 5.

Le forage est alors réalisé, la tarière en pénétrant dans un des guides perce le guide et expulse des fragments de ce dernier. La matière formée par l'élément monobloc 5 est suffisamment cassable ou friable pour permettre un forage. Un intérêt est de supprimer l'état de retrait du guide tout en permettant le forage.

Lorsqu'un retrait est effectué avant le forage, les guides 10 de l'élément monobloc 5 sont aisément recyclables du fait qu'ils sont biodégradables, voire réutilisables comme matériau pour réaliser d'autres ouvrages. Un intérêt de la cavité centrale réalisée dans chaque guide 10 est qu'elle permet soit de faciliter l'opération de retrait avant forage, soit d'intégrer un élément de guidage supplémentaire tel qu'un marquage réaliser directement sur le guide soit sur un élément inséré dans la réservation.

Selon un mode de réalisation, et tel que présenté en figure 11, le moule 9 est adapté pour le moulage d'un élément monobloc 5 adapté pour guider le forage d'un seul pieu P₁. L'élément monobloc 5 comporte une section transversale de forme générale circulaire qui comporte deux découpes selon des tangentes du cercle formant la section circulaire. Les deux tangentes sont de préférence parallèles entre elles. Un avantage conféré par cette forme pour l'élément monobloc 5 est de permettre une disposition de plusieurs éléments monoblocs 5 en ligne afin de réaliser le moulage de la murette de guides et de permettre le guidage de plusieurs forages de pieux. Lorsque les découpes sont parallèles entre elles, une découpe d'un élément monobloc est mise en contact avec une découpe d'un autre élément monobloc 5 pour former une ligne droite d'éléments monoblocs. Un avantage d'avoir plusieurs éléments monoblocs chacun adapté au forage d'un seul pieu est de faciliter l'installation sur site en permettant un déplacement facile d'un élément monobloc, car celui-ci comporte une taille relativement faible. Un autre avantage est de fournir une modularité dans la géométrie des lignes d'éléments monoblocs une fois que ceux-ci sont installés. De cette manière, on peut choisir le nombre d'éléments monoblocs 5 nécessaires pour réaliser la longueur de la murette de guide 4 à couler. Selon un mode de réalisation, les deux découpes de l'élément monobloc 5 ne sont pas parallèles. En d'autres termes, elles forment un angle entre elles. Cette disposition permet de former un angle entre deux lignes d'éléments monoblocs 5 une fois que ceux-ci sont installés. Un exemple d'une telle réalisation est montré en figure 12. Sur celle-ci un ensemble d'éléments monoblocs 5 forment une première ligne 50 pour le coulage d'une murette de guide droite. Un deuxième ensemble d'éléments monoblocs 5 forme une deuxième ligne qui est perpendiculaire à la première ligne d'éléments monoblocs. Un élément monobloc d'angle 5b est situé à l'intersection des deux lignes. Les deux découpes de l'élément monobloc d'angle 5b sont dans ce cas orientées selon des lignes perpendiculaires entre elles. De cette manière, il est possible de poser un élément monobloc d'angle 5b entre deux lignes droites d'éléments monobloc pour que celles-ci soient perpendiculaires. Cette disposition permet d'ajustement facilement la géométrie des murettes de guides à l'architecture de l'ouvrage à réaliser.

Selon un mode de réalisation, les découpes de l'élément monobloc 5 sont orientées suivant de lignes formant un angle proche de 45 degrés entre elles, de préférence 45 degrés. De cette manière on peut placer un élément monobloc d'angle 5b entre deux lignes d'éléments monoblocs formant un angle de 45 degrés entre elles. Selon un mode de réalisation, les découpes de l'élément monobloc d'angle 5b sont orientées suivant de lignes formant un angle compris entre 10 degrés et 45 degrés entre elles. Avantageusement, on peut placer plusieurs éléments monoblocs d'angle 5b consécutivement. Cette disposition permet avantageusement de former une suite d'éléments monoblocs d'angle qui sont placés suivant un arc de cercle ou suivant une courbe. Cette disposition permet de suivre toute géométrie de l'architecture de l'ouvrage à réaliser.

Selon un mode de réalisation, la portion cylindrique de l'élément monobloc 5 comprend une section ayant une forme de polygone. Selon un mode de réalisation, la section a une forme de polygone à 3, quatre, cinq six, sept, huit, neuf ou bien dix côtés. Selon un mode de réalisation, la section à une forme d'hexagone. La forme d'hexagone est particulièrement avantageuse car elle permet d'utiliser une même forme d'élément monobloc pour réaliser des lignes d'éléments monoblocs 5 droites et pour réaliser des angles en utilisant comme surface de contact entre deux éléments monoblocs des parties qui comportent un angle entre elles. En d'autres termes, la forme d'hexagone correspond à une section circulaire dans laquelle six découpes sont réalisées. Ainsi, l'utilisateur peut choisir quelles découpes de chaque élément monobloc 5 successif il met en contact dans une suite d'éléments monoblocs 5. De cette manière, les éléments monoblocs successifs peuvent être placés en ligne droite, ou former un angle entre deux lignes droites, ou bien en courbe.

Selon un mode de réalisation, lors de la réalisation de la structure d'accueil 4 formant une murette de guide, plusieurs éléments monoblocs 5 peuvent être superposés les uns sur les autres. De cette manière, on peut superposer un, deux, ou trois, quatre, cinq éléments monoblocs 5 les uns sur les autres. Cette disposition permet d'augmenter la hauteur des cavités 7 occupées par les éléments monoblocs. Avantageusement, cette disposition permet d'obtenir une même hauteur de cavité 7 tout en ayant des éléments monoblocs 5 qui sont de hauteur et donc de poids réduit. Cette disposition est donc particulièrement avantageuse pour faciliter l'installation et la prise en main d'éléments monoblocs plus légers.

Selon un mode de réalisation, les éléments monoblocs 5 sont placés dans la structure d'accueil 4 de manière à être chacun en contact avec l'élément monobloc suivant. Dans ce cas, les éléments monoblocs comportent les découpes permettant d'avoir par la suite des pieux formés qui sont sécants. Par pieux sécants, on entend des pieux dont la base est circulaire et qui comportent des découpes latérales qui sont en contact entre un pieu le pieu situé directement à proximité de celui-ci. De tels pieux sécants sont illustrés en figure 1.

Selon un mode de réalisation, les éléments monoblocs 5 sont placés dans la structure d'accueil 4 de manière à être chacun en contact avec l'élément monobloc suivant. Dans ce cas, les éléments monoblocs comportent une section circulaire. De cette manière, les éléments monoblocs 5 permettent dans la structure d'accueil de former des pieux tangents. On entend par pieux tangents des pieux de section circulaire en contact les uns avec les autres.

Selon un mode de réalisation, les éléments monoblocs 5 sont placés dans la structure d'accueil 4 de manière à être distants les uns des autres. Selon ce mode de réalisation, chaque élément monobloc est distant d'une distance de 10 cm de l'élément monobloc suivant. De cette manière, les éléments monoblocs 5 permettent dans la structure d'accueil de former des pieux distants. La distance entre chaque pieu peut être adaptée suivant les besoins de construction et peut donc être inférieure ou supérieure à 10 cm.

## Revendications

1. Procédé de fabrication d'un élément monobloc (5), ledit élément monobloc étant apte à définir un coffrage perdu et à former une cible et/ou un guide de forage, ledit procédé étant **caractérisé en ce qu'**il comporte :
▪ Mélange (MEL) d'un volume de liant hydraulique comportant un premier volume d'eau et un second volume d'un élément de liaison avec un volume d'une base organique ;
▪ Moulage (MOUL) pour obtenir un élément monobloc (5) comportant au moins une portion cylindrique (10) d'un rayon d'au moins 40cm,
▪ Séchage (SEC) dudit mélange (MEL) moulé formant un élément monobloc (5).

2. Procédé de fabrication selon la revendication 1 **caractérisé en ce qu'**il comprend une étape d'évidement (EVID) de matière d'une portion centrale (11) de l'élément monobloc (5) dans une zone centrale (11) de la portion de cylindre (10) pour former un guide.

3. Procédé de fabrication selon l'une quelconque des revendications 1 à 2 **caractérisé en ce qu'**il comprend une étape de découpage de l'élément monobloc (5), ledit découpage permettant d'obtenir une forme prédéterminée.

4. Procédé de fabrication selon l'une quelconque des revendications 1 à 3 **caractérisé en ce qu'**il comprend une étape d'assemblage d'une pluralité d'éléments monoblocs (5) entre eux afin de réaliser une murette de guides, lesdits éléments monoblocs (5) comportant des éléments de liaison afin de solidariser deux extrémités de deux éléments monoblocs (5) entre eux.

5. Procédé de fabrication selon l'une quelconque des revendications 1 à 4 **caractérisé en ce que** le moulage (MOUL) de l'élément monobloc (5) est réalisé au moyen d'un moule (9) permettant de former au moins un guide dont les centres des portions cylindriques considérés ensemble forment une géométrique caractéristique, telle qu'une ligne, une courbe, une forme en « T » ou une forme en « L ».

6. Procédé de fabrication selon l'une quelconque des revendications 1 à 5 **caractérisé en ce que** les portions cylindriques adjacentes d'un élément monobloc sont distantes d'une distance prédéfinie, tangents entre eux ou intersectés sur une portion de leur rayon.

7. Procédé de fabrication selon l'une quelconque des revendications 1 à 6 **caractérisé en ce que** le mélange comprend :
▪ d'un volume d'eau dans une proportion en volume du mélange comprise entre 15 et 27% ;
▪ d'un volume de chaux et/ou de plâtre et/ou de ciment et/ou de laitier de haut fourneau formant un élément de liaison dans une proportion en volume du mélange comprise entre 20% et 40% ;
▪ d'un volume de paille formant une base organique dans une proportion en volume du mélange comprise entre 33% et 65%.

8. Procédé de fabrication selon la revendication 1 **caractérisé en ce que** le procédé comporte une étape de colorisation de chaque profilé cylindrique d'un mélange pour former un élément monobloc ayant une coloration alternée entre deux profilés cylindriques adjacents.

9. Elément monobloc (5) pour définir un coffrage perdu apte à former une cible et/ou un guide de forage, ledit élément monobloc (5) formant au moins une portion cylindrique d'un rayon d'au moins 40 centimètres, comprenant une matière sèche issue d'un mélange d'un volume d'eau, d'un volume d'un élément de liaison et d'un volume d'une base organique.

10. Utilisation d'un élément monobloc (5) selon la revendication 9, comportant :
▪ la formation d'une structure d'accueil en béton (4) pour l'accueil d'une paroi de pieux (P₁, P₂), et/ou
▪ l'agencement dudit au moins un élément monobloc (5) dans une structure d'accueil en béton (4) destiné à recevoir des pieux (P₁, P₂), ledit forage étant réalisé au moyen d'une tarière (2) dont la tête (20) est appliquée sur une surface de ledit au moins un élément monobloc (5).

11. Utilisation selon la revendication 10, **caractérisée en ce que** le mélange comprend :
▪ d'un volume d'eau dans une proportion en volume du mélange comprise entre 15 et 27% ;
▪ d'un volume de chaux et/ou de plâtre et/ou de ciment et/ou de laitier de haut fourneau formant un élément de liaison dans une proportion en volume du mélange comprise entre 20% et 40% ;
▪ d'un volume de paille formant une base organique dans une proportion en volume du mélange comprise entre 33% et 65%.

12. Structure d'accueil (4) formant une murette de guides (4) pour la réalisation d'une paroi de pieux (8) comportant une base de béton (40) et des cavités (7), lesdites cavités étant occupées par au moins un élément monobloc (5) selon la revendication 9.

13. Structure d'accueil (4) selon la revendication 12 **caractérisée en ce que** le mélange du au moins un élément monobloc (5) comprend :
▪ d'un volume d'eau dans une proportion en volume du mélange comprise entre 15 et 27% ;
▪ d'un volume de chaux et/ou de plâtre et/ou de ciment et/ou de laitier de haut fourneau formant un élément de liaison dans une proportion en volume du mélange comprise entre 20% et 40% ;
▪ d'un volume de paille formant une base organique dans une proportion en volume du mélange comprise entre 33% et 65%.

## Patentansprüche

1. Verfahren zur Herstellung eines einteiligen Elements (5), wobei das einteilige Element dazu geeignet ist, eine verlorene Schalung zu definieren und ein Ziel und/oder eine Bohrführung zu bilden, wobei das Verfahren **dadurch gekennzeichnet ist, dass** es Folgendes umfasst:
▪ Mischen (MEL) eines Volumens eines hydraulischen Bindemittels, das ein erstes Wasservolumen und ein zweites Volumen eines Verbindungselements mit einem Volumen einer organischen Basis umfasst;
▪ Gießen (MOUL), um ein einteiliges Element (5) zu erhalten, das mindestens einen zylindrischen Abschnitt (10) mit einem Radius von mindestens 40 cm aufweist,
▪ Trocknen (SEC) des gegossenen Gemisches (MEL), das ein einteiliges Element (5) bildet.

2. Herstellungsverfahren nach Anspruch 1, **dadurch gekennzeichnet, dass** es einen Schritt des Aushöhlens (EVID) von Material aus einem Mittelabschnitt (11) des einteiligen Elements (5) in einem Mittelbereich (11) des Zylinderabschnitts (10) zur Bildung einer Führung umfasst.

3. Herstellungsverfahren nach einem der Ansprüche 1 bis 2, **dadurch gekennzeichnet, dass** es einen Schritt des Zuschneidens des einteiligen Elements (5) umfasst, wobei das Zuschneiden das Erreichen einer vorbestimmten Form ermöglicht.

4. Herstellungsverfahren nach einem der Ansprüche 1 bis 3, **dadurch gekennzeichnet, dass** es einen Schritt des Zusammenfügens mehrerer einteiliger Elemente (5) untereinander umfasst, um eine Wandung von Führungen herzustellen, wobei die einteiligen Elemente (5) Verbindungselemente umfassen, um zwei Enden von zwei einteiligen Elementen (5) miteinander zu verbinden.

5. Herstellungsverfahren nach einem der Ansprüche 1 bis 4, **dadurch gekennzeichnet, dass** das Gießen (MOUL) des einteiligen Elements (5) mittels einer Form (9) ausgeführt wird, die es ermöglicht, mindestens eine Führung zu bilden, deren Mittelpunkte der betrachteten zylindrischen Abschnitte zusammen eine charakteristische Geometrie bilden, wie eine Linie, eine Kurve, eine "T"-Form oder eine "L"-Form.

6. Herstellungsverfahren nach einem der Ansprüche 1 bis 5, **dadurch gekennzeichnet, dass** die benachbarten zylindrischen Abschnitte eines einteiligen Elements in einem vordefinierten Abstand voneinander entfernt sind, tangential zueinander sind oder sich in einem Abschnitt ihres Radius schneiden.

7. Herstellungsverfahren nach einem der Ansprüche 1 bis 6, **dadurch gekennzeichnet, dass** das Gemisch umfasst:
▪ ein Volumen von Wasser in einem Volumenanteil des Gemisches zwischen 15 und 27 %;
▪ ein Volumen an Kalk und/oder Gips und/oder Zement und/oder Hochofenschlacke, das ein Bindeglied bildet, in einem Volumenanteil des Gemisches zwischen 20 % und 40 %;
▪ ein Strohvolumen, das eine organische Basis in einem Volumenanteil des Gemisches zwischen 33 % und 65 % bildet.

8. Herstellungsverfahren nach Anspruch 1, **dadurch gekennzeichnet, dass** das Verfahren einen Schritt der Färbung jedes zylindrischen Profils eines Gemisches zur Bildung eines einteiligen Elements mit einer abwechselnden Färbung zwischen zwei benachbarten zylindrischen Profilen umfasst.

9. Einteiliges Element (5) zur Definition einer verlorenen Schalung, die geeignet ist, ein Ziel und/oder eine Bohrführung zu bilden, wobei das einteilige Element (5) mindestens einen zylindrischen Abschnitt mit einem Radius von mindestens 40 Zentimetern bildet, umfassend ein Trockenmaterial aus einem Gemisch aus einem Wasservolumen, einem Volumen eines Verbindungselements und einem Volumen einer organischen Basis.

10. Verwendung eines einteiligen Elements (5) nach Anspruch 9, umfassend:
▪ die Bildung einer Betonaufnahmestruktur (4) zur Aufnahme einer Pfahlwand (P₁, P₂), und/oder
▪ die Anordnung des mindestens einen einteiligen Elements (5) in einer Betonaufnahmestruktur (4) zur Aufnahme von Pfählen (P₁, P₂), wobei das Bohren mittels eines Bohrers (2) erfolgt, dessen Kopf (20) auf einer Oberfläche des mindestens einen einteiligen Elements (5) aufgebracht wird.

11. Verwendung nach Anspruch 10, **dadurch gekennzeichnet, dass** das Gemisch umfasst:
▪ ein Volumen von Wasser in einem Volumenanteil des Gemisches zwischen 15 und 27 %;
▪ ein Volumen an Kalk und/oder Gips und/oder Zement und/oder Hochofenschlacke, das ein Bindeglied bildet, in einem Volumenanteil des Gemisches zwischen 20 % und 40 %;
▪ ein Strohvolumen, das eine organische Basis in einem Volumenanteil des Gemisches zwischen 33 % und 65 % bildet.

12. Aufnahmestruktur (4), die eine Wandung von Führungen (4) zur Herstellung einer Pfahlwand (8) bildet, die eine Betonbasis (40) und Hohlräume (7) umfasst, wobei die Hohlräume von mindestens einem einteiligen Element (5) nach Anspruch 9 belegt werden.

13. Aufnahmestruktur (4) nach Anspruch 12, **dadurch gekennzeichnet, dass** das Gemisch des mindestens einen einteiligen Elements (5) umfasst:
▪ ein Volumen von Wasser in einem Volumenanteil des Gemisches zwischen 15 und 27 %;
▪ ein Volumen an Kalk und/oder Gips und/oder Zement und/oder Hochofenschlacke, das ein Bindeglied bildet, in einem Volumenanteil des Gemisches zwischen 20 % und 40 %;
▪ ein Strohvolumen, das eine organische Basis in einem Volumenanteil des Gemisches zwischen 33 % und 65 % bildet.

## Claims

1. A method for manufacturing a single-piece element (5), said single-piece element being capable of defining a lost formwork and forming a target and/or a drilling guide, said method being **characterised in that** it includes:
• Mixing (MEL) a volume of hydraulic binder including a first volume of water and a second volume of a binding element with a volume of an organic base;
• Moulding (MOUL) to obtain a single-piece element (5) including at least one cylindrical portion (10) with a radius of at least 40 cm,
• Drying (SEC) said moulded mixture (MEL) molded forming a single-piece element (5).

2. The manufacturing method according to claim 1, **characterised in that** it comprises a step of hollowing out (EVID) material from a central portion (11) of the single-piece element (5) in a central zone (11) of the cylinder portion (10) to form a guide.

3. The manufacturing method according to any of claims 1 to 2, **characterised in that** it comprises a step of cutting the single-piece element (5), said cutting allowing a predetermined shape to be obtained.

4. The manufacturing method according to any of claims 1 to 3, **characterised in that** it comprises a step of assembling a plurality of single-piece elements (5) together to form a guide wall, said single-piece elements (5) comprising connecting elements for securing two ends of two single-piece elements (5) together.

5. The manufacturing method according to any of claims 1 to 4, **characterised in that** the moulding (MOUL) of the single-piece element (5) is carried out using a mould (9) allowing at least one guide to be formed, and **in that** centres of cylindrical portions of the guide, when considered together, form a characteristic geometric shape, such as a line, a curve, a "T" -shape or an "L" -shape.

6. The manufacturing method according to any of claims 1 to 5, **characterised in that** the adjacent cylindrical portions of a single-piece element are spaced apart by a predetermined distance, tangent to each other or intersecting on a portion of their radius.

7. The manufacturing method according to any of claims 1 to 6, **characterised in that** the mixture comprises:
• a volume of water in a proportion by volume of the mixture of between 15 and 27%;
• a volume of lime and/or plaster and/or cement and/or blast furnace slag forming a binding element in a proportion by volume of the mixture of between 20% and 40%;
• a volume of straw forming an organic base in a proportion by volume of the mixture of between 33% and 65%.

8. The manufacturing method according to claim 1, **characterised in that** the method comprises a step of colouring each cylindrical profile with a mixture to form a single-piece element with alternating colours between two adjacent cylindrical profiles.

9. A single-piece element (5) for defining a lost formwork suitable for forming a target and/or a drilling guide, said monobloc element (5) forming at least one cylindrical portion with a radius of at least 40 centimetres, comprising a dry material derived from a mixture of a volume of water, a volume of a binding agent and a volume of an organic base.

10. Use of a single-piece element (5) according to claim 9, comprising:
• the formation of a concrete accommodating structure (4) for accommodating a wall of piles (P1, P2), and/or
• the arrangement of said at least one single-piece element (5) in a concrete accommodating structure (4) intended to receive piles (P1, P2), said drilling being carried out by means of an auger (2) whose head (20) is applied to a surface of said at least one single-piece element (5).

11. The use according to claim 10, **characterised in that** the mixture comprises:
• a volume of water in a proportion by volume of the mixture of between 15 and 27%;
• a volume of lime and/or plaster and/or cement and/or blast furnace slag forming a binding element in a proportion by volume of the mixture of between 20% and 40%;
• a volume of straw forming an organic base in a proportion by volume of the mixture of between 33% and 65%.

12. An accommodating structure (4) forming a guide wall (4) for making a pile wall (8) comprising a concrete base (40) and cavities (7), said cavities being occupied by at least one single-piece element (5) according to claim 9.

13. The accommodating structure (4) according to claim 12, **characterised in that** the mixture of the at least one single-piece element (5) comprises:
• a volume of water in a proportion by volume of the mixture of between 15 and 27%;
• a volume of lime and/or plaster and/or cement and/or blast furnace slag forming a binding element in a proportion by volume of the mixture of between 20% and 40%;
• a volume of straw forming an organic base in a proportion by volume of the mixture of between 33% and 65%.
